# EUROPÄISCHE PATENTANMELDUNG

(11) **EP 1 555 367 A2**
(43) Veröffentlichungstag der Anmeldung: **20.07.2005**
(21) Anmeldenummer: 04028891.2
(22) Anmeldetag: 07.12.2004
(51) Int. Cl.: E05C 17/28, E05D 15/52

(54) **Ausstellvorrichtung für einen Drehkippflügel eines Fensters oder einer Tür**

(30) Priorität: 13.01.2004 DE 202004000405 U
(71) Anmelder: SCHÜCO International KG, 33609 Bielefeld (DE)
(72) Erfinder: Wilker, Burkhard, 33619 Bielefeld (DE)
(74) Vertreter: Dantz, Jan Henning

(57) **Zusammenfassung**

Eine Ausstellvorrichtung für einen Drehkippflügel eines Fensters oder einer Tür umfasst einen Ausstellarm, der einerseits an einem Blendrahmen eines Fensters oder einer Tür gelagert ist und andererseits mit einem flügelseitig festlegbaren Scherengehäuse (20) verbunden ist, wobei in einer Kippstellung eine kraftschlüssige Sicherung (1") ein unbeabsichtigtes Zurückschwenken verhindert, wobei die Kraft zum Überwinden der kraftschlüssigen Sicherung (1") und Zurückschwenken des Drehkippflügels aus der Kippstellung verstellbar ist. Dadurch kann die Ausstellvorrichtung sowohl für kleine als auch große Drehkippflügel eingesetzt werden.

## Beschreibung

Die vorliegende Erfindung betrifft eine Ausstellvorrichtung für einen Drehkippflügel eines Fensters oder einer Tür, mit einem Ausstellarm, der einerseits an einem Blendrahmen eines Fensters oder einer Tür gelagert ist und andererseits mit einem flügelseitig festlegbaren Scherengehäuse verbunden ist, wobei in einer Kippstellung eine kraftschlüssige Sicherung ein unbeabsichtigtes Zurückschwenken verhindert.

In der DE 43 13 610 ist eine Ausstellvorrichtung für einen Drehkippflügel gezeigt, bei dem ein Ausstellarm über ein Führungsteil an einem Scherengehäuse verschiebbar und verschwenkbar gelagert ist. Das Führungsteil wird mit einem federnden Rastteil verbunden, das bei einer maximalen verschwenkten Stellung des Ausstellarmes und damit des Drehkippflügels einen Rastvorsprung hintergreift, um ein unbeabsichtigtes Zurückschwenken, beispielsweise durch Windkräfte zu verhindern. Bei dieser Zuschlagsicherung ist nachteilig, dass das federnde Rastteil unabhängig von der Größe des Drehkippflügels eine Sicherung gegen ein Zurückschwenken bereitstellt. Mit zunehmender Flügelhöhe und zunehmendem Flügelgewicht steigen jedoch auch die Zuschlagkräfte, die meist durch Wind verursacht werden. Bei besonders schweren Fenster- oder Türflügeln, die relativ hoch ausgeführt sind, liegt der Kipppunkt bzw. Drehpunkt des Flügels dann im Verhältnis zum Flügel so ungünstig, dass schon kleinste Kräfte ausreichen können, um die kraftschlüssige Sicherung zu überwinden.

Auch die DE 80 23 717 zeigt eine Ausstellvorrichtung für Drehkippflügel, bei der ein Führungsteil verschiebbar in einem Scherengehäuse gelagert ist. Das Führungsteil weist u-förmige Schenkel auf, in denen Einbuchtungen ausgespart sind, in die entsprechende Vorsprünge an der Halteschiene des Scherengehäuses in der ausgeschwenkten Position eingreifen. Die Sicherung gegen ein unbeabsichtigtes Zurückschwenken kann auch hier nur vorbestimmte Sicherungskräfte bereitstellen, die gerade bei großen Drehkippflügeln nicht mehr ausreichen.

Es ist daher Aufgabe der vorliegenden Erfindung eine Ausstellvorrichtung für einen Drehkippflügel zu schaffen, die für unterschiedlich große Flügel eine zuverlässige Sicherung gegen ein unbeabsichtigtes Zurückschwenken bereitstellt.

Diese Aufgabe wird mit einer Ausstellvorrichtung mit den Merkmalen des Anspruches 1 gelöst.

Erfindungsgemäß ist die Kraft zum Überwinden der kraftschlüssigen Sicherung und Zurückschwenken des Drehkippflügels aus einer Kippstellung verstellbar, damit eine Anpassung der Sicherungskräfte an die Größe des jeweiligen Drehkippflügels erfolgen kann. Dadurch kann die Ausstellvorrichtung sowohl für kleine als auch große Drehkippflügel eingesetzt werden. Die Verstellung der Sicherung kann dabei stufenlos oder in voreingestellten Stufen erfolgen, je nachdem wie sensibel eine Feineinstellung erfolgen soll. Durch die erfindungsgemäße Ausstellvorrichtung wird vermieden, dass für unterschiedliche Fenstergrößen und Gewichte unterschiedliche Sicherungseinrichtungen bereitgestellt werden müssen.

Gemäß einer bevorzugten Ausführungsform der Erfindung weist die kraftschlüssige Sicherung federnde Rastmittel auf, deren Federkräfte verstellbar sind. Vorzugsweise können die Rastmittel zumindest zwei unterschiedlich hohe Klemmkräfte für die Sicherung bereitstellen.

Für eine einfache mechanische Ausgestaltung der Ausstellvorrichtung weist die kraftschlüssige Sicherung ein an dem Scherengehäuse verschiebbar gelagertes Führungsteil auf, das mindestens einen federnden Schenkel umfasst und die Länge des federnden Bereiches des Schenkels verstellbar ist. Vorzugsweise weist das Führungsteil zwei u-förmige angeordnete Schenkel auf, zwischen denen zur Verstellung des federnden Bereiches der Schenkel ein Raststein einfügbar ist. Dadurch kann eine Anpassung der Ausstellvorrichtung an die Größe des jeweiligen Drehkippflügels einfach und schnell vorgenommen werden. Um eine nachträgliche Entfernung des Raststeins zu vermeiden ist dieser bevorzugt klemmend zwischen den Schenkeln gehalten.

Damit der Raststein des Führungsteils nicht versehentlich verloren gehen kann, ist dieser vorzugsweise über ein Filmscharnier mit dem Führungsteil verbunden und kann bei Bedarf zwischen die Schenkel eingefügt werden. Meist muss bei der Ausstellvorrichtung nur eine einzige Anpassung an die notwendigen Sicherungskräfte vorgenommen werden. Diese Anpassung kann vorzugsweise auch im montierten Zustand der Ausstellvorrichtung erfolgen, sodass auch eine nachträgliche Anpassung möglich ist. Für eine einfache Einstellung ist vorzugsweise der Raststein mittels eines Werkzeuges montierbar oder demontierbar, wobei hierfür der Raststein einen Innensechskant aufweisen kann.

Die Erfindung wird nachfolgend anhand mehrerer Ausführungsbeispiele mit Bezug auf die beigefügten Zeichnungen näher erläutert. Es zeigen:
- Figur 1: eine Ansicht auf ein erstes Ausführungsbeispiel eines Führungsteils einer erfindungsgemäßen Ausstellvorrichtung;
- Figur 2: eine Ansicht eines Führungsteils gemäß einer zweiten Ausführungsform für eine erfindungsgemäße Ausstellvorrichtung;
- Figur 3: eine Ansicht eines Führungsteils gemäß einer dritten Ausführungsform für eine erfindungsgemäße Ausstellvorrichtung, und
- Figur 4: eine perspektivische Ansicht des Führungsteils der Figur 3 im montierten Zustand.

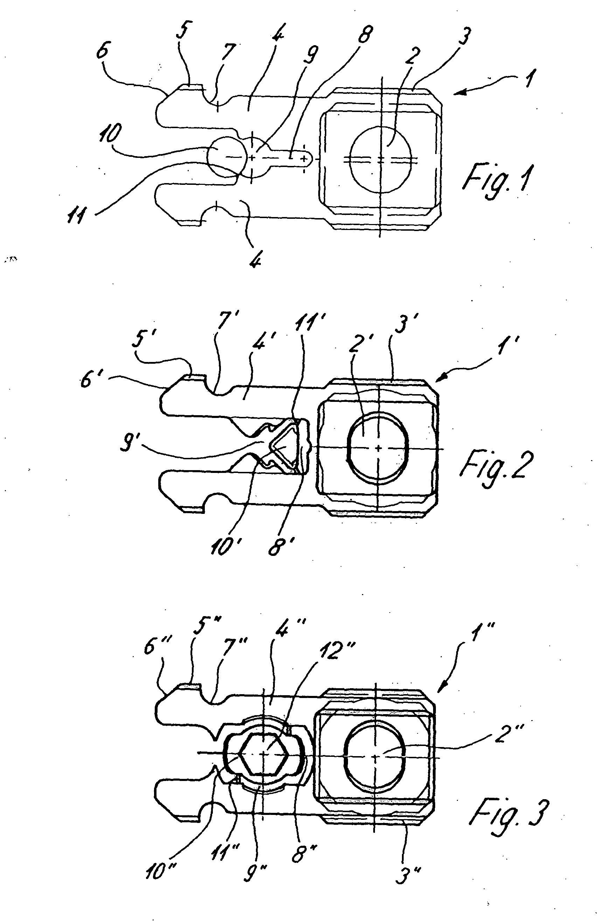

Ein in Figur 1 gezeigtes Führungsteil 1 dient zur Lagerung eines Ausstellarmes an einem schienenförmigen Scherengehäuse, so wie es im Aufbau in der DE 43 13 610 gezeigt ist. Das Führungsteil 1 ist aus Kunststoff hergestellt und weist eine Öffnung 2 zur Aufnahme eines Zapfens des Ausstellarmes auf. An gegenüberliegenden Seiten der Öffnung 2 sind Führungsflächen 3 ausgebildet, die an Seitenwänden eines schienenförmigen Scherengehäuses anliegen können.

Für eine Zuschlagsicherung weist das Führungsteil 1 zwei u-förmig angeordnete Schenkel 4 auf, die an einem vorderen Endabschnitt seitliche Führungsflächen 5 besitzen, die an einer Innenwand des Scherengehäuses anliegen können. An den beiden Innenwänden des Scherengehäuses ist jeweils ein nach innen gerichteter Vorsprung vorgesehen, der bei Bewegung des Führungsteils 1 in nach außen gerichtete Aussparungen 7 an den Schenkeln eingreifen kann. Benachbart zu den Führungsflächen 5 ist eine Einführschräge 6 angeordnet, um bei einem Bewegen des Führungsteils 1 ein Verklemmen zu vermeiden und das Führungsteil 1 leichtgängig in dem Scherengehäuse bewegen zu können. Der Vorsprung an dem Scherengehäuse kann, muss aber nicht formschlüssig in der Aussparung 7 anliegen.

Zwischen den Schenkeln 4 ist ein Schlitz 8 ausgebildet, der die Länge des federnden Bereichs der Schenkel 4 vorgibt. Ferner ist zwischen den Schenkeln 4 eine Aufnahme 9 für einen Raststein 10 ausgespart. Der Raststein 10 ist dabei über ein Filmscharnier 11 am Schenkel 4 unverlierbar gehalten und kann bei Bedarf in die Aufnahme 9 eingefügt werden wo er dann klemmend gehalten ist.

Für kleinere Drehkippflügel kann der Raststein in der Position außerhalb der Aufnahme 9 verbleiben. Dadurch ist der federnde Bereich der Schenkel 4 durch die Länge der Schenkel 4 gebildet und es kann ein vergleichsweise leichtes Einrasten des Führungsteils 1 erfolgen. Falls das Führungsteil 1 bei schwereren Drehkippflügeln eingesetzt werden soll, kann der Raststein 10 in die Aufnahme 9 eingefügt werden, wodurch sich der federnde Bereich der Schenkel 4 verkürzt und nur noch der Bereich zwischen dem Raststein 10 und dem Endabschnitt der Schenkel 4 zum Federn übrig bleibt. Dadurch werden höhere Kräfte benötigt, um das einmal eingerastete Führungsteil 1 aus der Raststellung herauszubewegen.

In Figur 2 ist eine zweite Ausführungsform eines Führungsteils 1' einer erfindungsgemäßen Ausstellvorrichtung gezeigt, bei der ähnliche Bauteile mit dem gleichen Bezugszeichen wie bei Figur 1 versehen sind, jedoch um einen Strich ergänzt sind. Bei dem Führungsteil 1' ist die Form der Schenkel 4' dahingehend modifiziert, als dass zwischen Schenkeln 4' ein breiterer Schlitz 8' ausgebildet ist, an dem eine Aufnahme 9' für einen Raststein 10' vorgesehen ist. Der Raststein 10' ist durch einen in Draufsicht dreieckförmigen Körper und nicht durch einen Bolzen gebildet. Der Raststein 10' ist an gegenüberliegenden Seiten durch Filmscharniere 11' mit den Schenkeln 4' des Führungsteils 1' verbunden und kann in die Aufnahme 9' verschoben werden, beispielsweise wenn ein Schraubendreher in den Schlitz 8' eingefügt wird und dann der Raststein 10' verschoben wird. Dabei können die Filmschamiere 11' ganz oder teilweise entfernt werden, meist muss eine solche Einstellung nur einmal bei der Montage vorgenommen werden. Sobald der Raststein 10' in der Aufnahme 9' angeordnet ist, sind die Schenkel 4' nur noch in einem kürzeren Bereich federnd ausgebildet und es sind höhere Kräfte erforderlich, um einen eingerasteten Schenkel 4' wieder zu bewegen.

In Figur 3 ist eine dritte Ausführungsform eines Führungsteils 1" dargestellt, das im wesentlichen Aufbau mit den vorangegangenen Führungsteilen 1 und 1' übereinstimmt. Das Führungsteil 1" weist Schenkel 4" auf, zwischen denen ein Raststein 10" vorgesehen ist, der über Filmschamiere 11" mit den Schenkeln 4" verbunden ist. Der Raststein 10" wird jedoch nicht in eine Aufnahme 9" zwischen den Schenkeln 4" verschoben, sondern durch eine Drehbewegung zwischen die Schenkel 4" geklemmt. Hierfür weist der Raststein 10" einen Innensechskant 12" auf, in den ein Werkzeug einfügbar ist, um den Raststein 10" zu drehen. Nach einer Drehbewegung liegt der Raststein 10" klemmend zwischen den Schenkeln 4" an und verkürzt somit den federnden Bereich.

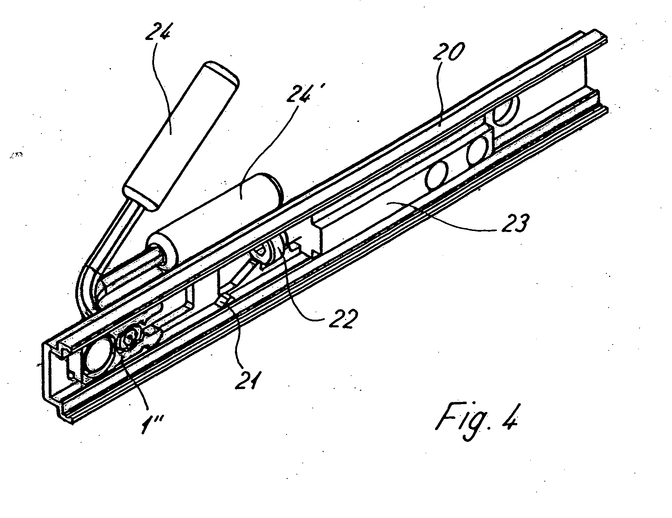

In Figur 4 ist das Führungsteil der Figur 3 in der montierten Position innerhalb eines schienenförmigen Scherengehäuses 20 gezeigt. In dem Scherengehäuse 20 ist ein Befestigungsteil 23 montiert, an dem eine Verstellschraube 22 eingedreht ist.

Vor der Verstellschraube 22 sind an gegenüberliegenden Seiten des im Querschnitt u-förmigen Scherengehäuses 20 nach innen gerichtete Vorsprünge 21 ausgebildet, die in die Aussparung 7, 7' und 7" der Führungsteile 1, 1' und 1" eingreifen können, wenn das Führungsteil sich in der maximal ausgeschwenkten Position des Drehkippflügels befindet. Um auch noch nach der Montage der Ausstellvorrichtung eine Verstellung der Sicherung gegen ein Zurückschwenken des Drehkippflügels vornehmen zu können, kann mittels eines Werkzeuges 24, hier ein Rastschlüssel, in den Innensechskant des Führungsteils 1" eingefügt werden und durch Drehen in die Position 24' der Raststein 10" aktiviert werden, um den federnden Bereich der Schenkel 4" zu verkürzen.

Die Erfindung ist nicht auf die dargestellten Ausführungsbeispiele beschränkt. Die Form und die Anordnung der Raststeine zwischen den Schenkeln kann variiert werden. Beispielsweise kann statt einer zweistufigen Verstellmöglichkeit auch eine mehrstufige Verstellmöglichkeit vorgesehen werden, wenn mehrere Raststeine entlang des Schlitzes zwischen den Schenkeln montiert werden können. Auch eine stufenlose Verstellung der Rastmittel ist möglich, beispielsweise wenn ein keilförmiges Element zur Verstellung des federnden Bereiches der Schenkel 4 eingesetzt wird.

In dem dargestellten Ausführungsbeispiel wirkt die Sicherung nur in der maximalen Kippstellung des Drehkippflügels. Es ist natürlich auch möglich, die Sicherung in ein oder mehreren Zwischenstellungen wirken zu lassen, so dass auf dem Verstellweg mehrere Rastpositionen vorhanden sind.

## Patentansprüche

1. Ausstellvorrichtung für einen Drehkippflügel eines Fensters oder einer Tür, mit einem Ausstellarm, der einerseits an einem Blendrahmen eines Fensters oder einer Tür gelagert ist und andererseits mit einem flügelseitig festlegbaren Scherengehäuse (20) verbunden ist, wobei in einer Kippstellung eine kraftschlüssige Sicherung (1, 1', 1 ") ein unbeabsichtigtes Zurückschwenken verhindert, **dadurch gekennzeichnet, dass** die Kraft zum Überwinden der kraftschlüssigen Sicherung (1, 1', 1") und Zurückschwenken des Drehkippflügels aus der Kippstellung verstellbar ist.

2. Ausstellvorrichtung nach Anspruch 1, **dadurch gekennzeichnet, dass** die kraftschlüssige Sicherung (1, 1', 1") federnde Rastmittel (4, 4', 4'') aufweist, deren Federkräfte verstellbar sind.

3. Ausstellvorrichtung nach Anspruch 1 oder 2, **dadurch gekennzeichnet, dass** die kraftschlüssige Sicherung ein an dem Scherengehäuse (20) verschiebbar gelagertes Führungsteil (1, 1', 1") aufweist, das mindestens einen federnden Schenkel (4, 4', 4") umfasst und die Länge des federnden Bereiches des Schenkels (4, 4', 4") verstellbar ist.

4. Ausstellvorrichtung nach Anspruch 3, **dadurch gekennzeichnet, dass** das Führungsteil (1, 1', 1") zwei u-förmig angeordnete Schenkel (4, 4', 4") aufweist, zwischen denen zur Verstellung des federnden Bereichs der Schenkel (4, 4', 4") ein Raststein (10, 10', 10") einfügbar ist.

5. Ausstellvorrichtung nach Anspruch 4, **dadurch gekennzeichnet, dass** der Raststein (10, 10', 10") klemmend zwischen den Schenkeln (4, 4', 4") gehalten ist.

6. Ausstellvorrichtung nach Anspruch 4 oder 5, **dadurch gekennzeichnet, dass** der Raststein (10, 10', 10") über ein Filmscharnier (11, 11', 11") mit dem Führungsteil (1, 1', 1") verbunden ist.

7. Ausstellvorrichtung nach einem der Ansprüche 4 bis 6, **dadurch gekennzeichnet, dass** der Raststein (10, 10', 10") mittels eines Werkzeuges montierbar und demontierbar ist.

8. Ausstellvorrichtung nach Anspruch 7, **dadurch gekennzeichnet, dass** in dem Raststein (10") eine Innensechskant (12") ausgespart ist.

9. Ausstellvorrichtung nach einem der Ansprüche 1 bis 8, **dadurch gekennzeichnet, dass** das Führungsteil (1, 1', 1") und der Raststein (10, 10', 10") aus Kunststoff hergestellt sind.
